# EUROPÄISCHE PATENTSCHRIFT

(11) **EP 3 572 931 B1**
(45) Veröffentlichungstag und Bekanntmachung des Hinweises auf die Patenterteilung: **02.07.2025**
(21) Anmeldenummer: 19174482.0
(22) Anmeldetag: 14.05.2019
(51) Int. Cl.: G06F 8/61, G06F 9/445, G06F 9/455

(54) **INSTALLATION UND KONFIGURATION VON BETRIEBS- UND ANWENDUNGSSOFTWARE AUS LOKALEN REPOSITORIES**
INSTALLATION AND CONFIGURATION OF OPERATING SYSTEM AND APPLICATION SOFTWARE USING LOCAL REPOSITORIES
INSTALLATION ET CONFIGURATION DE LOGICIELS D'EXPLOITATION ET D'APPLICATIONS UTILSANT DES DÉPÔTS DE DISTRIBUTION LOCALS

(30) Priorität: 23.05.2018 DE 102018112364
(43) Veröffentlichungstag der Anmeldung: 27.11.2019
(73) Patentinhaber: Fsas Technologies GmbH, 80807 München (DE)
(72) Erfinder: Bruderek, Timo, 80807 München (DE); Atzkern, Jürgen, 80807 München (DE)
(74) Vertreter: Epping - Hermann - Fischer

(56) Entgegenhaltungen:
- US-A1- 2012 204 173
- US-A1- 2016 224 572
- US-A1- 2017 228 245

## Beschreibung

Die Erfindung betrifft ein Verfahren zum Bereitstellen anwendungsorientierter Software für eine gewünschte anwendungsorientierte Funktionalität innerhalb eines Computersystems sowie ein Computersystem zum Bereitstellen einer gewünschten anwendungsorientierten Funktionalität.

Herkömmlich werden Anwendungen beziehungsweise anwendungsorientierte Software für eine gewünschte anwendungsorientierte Funktionalität innerhalb eines Computersystems, auf dem die anwendungsorientierte Software laufen soll, in einer Entwicklungsumgebung, zum Beispiel auf einem separaten Entwicklungs-Computersystem, erstellt. Die erstellte Software wird dann auf das Computersystem übertragen, auf dem die Software laufen soll. Zum Beispiel kann eine Datei auf dieses Computersystem geladen werden, die ein Abbild (Image) der erstellten Software umfasst. Änderungen in der Konfiguration beziehungsweise dem Funktionsumfang der anwendungsorientierten Software führen oftmals zu einer Änderung des gesamten Software-Paketes, zum Beispiel der Image-Datei, die auf das Computersystem transferiert werden muss. Dies resultiert darin, dass das gesamte Software-Paket durch einen Upload in das Computersystem eingespielt werden muss, um Änderungen an der Konfiguration oder dem Funktionsumfang der Software einzuspielen. Insbesondere in Anwendungsfällen, in denen die Bandbreite einer Datenverbindung für einen derartigen Upload eingeschränkt ist, z.B. bei Anwendungen des Computersystems als sogenanntes Edge-Computersysteme an Einsatzorten mit exponierter Lage und/oder starken Umwelteinflüssen, führt die bisherige Vorgehensweise nachteilig zu einem hohen Datenvolumen und ggf. langen Datenübertragungszeiten, wobei eine Datenübertragung vielfach fehlerhaft ist oder gänzlich scheitert.

Aus der US 2012/204173 A1 ist ein Computergerät bekannt, das virtuelle Maschinen unter Verwendung von Konfigurationsbefehlen konfiguriert. Jede der virtuellen Maschinen kann von einer entsprechenden Image-Datei der virtuellen Maschine booten. Wenn eine virtuelle Maschine bootet oder ausgeführt wird, kann die virtuelle Maschine aus Anwendungs- und Betriebssystemdateien lesen oder in diese schreiben, die in der entsprechenden Image-Datei der virtuellen Maschine enthalten sind. Vor dem Booten der virtuellen Maschine kann das Computergerät Konfigurationseigenschaften des Betriebssystems und der zu bootenden Anwendungen in einer jeweiligen virtuellen Maschine erhalten oder einstellen, indem es aus den Anwendungs- und Betriebssystemdateien liest oder in diese schreibt, die in der entsprechenden Image-Datei der virtuellen Maschine enthalten sind . Das Computergerät kann Konfigurationsbefehle ausführen, um die Konfigurationseigenschaften des Betriebssystems und der Anwendungen zu erhalten oder einzustellen.

Aus der US 2017/228245 A1 ist ein System bekannt, das Computeranweisungen umfassen kann, die bewirken können, dass ein Computergerät im Namen eines Benutzers eine Anforderung zum Zugreifen auf eine Anwendung erhält. Die Anforderung kann von einem dem Benutzer zugeordneten Client-Gerät erhalten werden. Die Computeranweisungen können ferner bewirken, dass das Computergerät bestimmt, ob das Clientgerät eine virtuelle Maschine ausführen muss, die die Anwendung ausführt. Die Computeranweisungen können ferner bewirken, dass das Computergerät erkennt, ob die virtuelle Maschine auf dem Clientgerät installiert ist. Die Computeranweisungen können ferner bewirken, dass das Computergerät veranlasst, dass die virtuelle Maschine auf dem Clientgerät installiert wird.

Es ist somit eine Aufgabe der Erfindung, ein Verfahren zum Bereitstellen anwendungsorientierter Software für eine gewünschte anwendungsorientierte Funktionalität sowie ein Computersystem zum Bereitstellen einer gewünschten anwendungsorientierten Funktionalität zu beschreiben, die eine flexible Konfiguration der anwendungsorientierten Software zum Bereitstellen variabler Funktionalitäten ermöglichen und dennoch die oben erläuterten Nachteile herkömmlicher Lösungen überwinden.

Diese Aufgabe wird gemäß einem ersten Aspekt durch ein Verfahren nach Patentanspruch 1 gelöst. Vorteilhafte Weiterbildungen und Implementierungen sind in den zugehörigen Unteransprüchen offenbart.

Das Verfahren ist zum Bereitstellen anwendungsorientierter Software für eine gewünschte anwendungsorientierte Funktionalität innerhalb eines Computersystems implementiert. Dabei werden Konfigurationsdaten auf das Computersystem übertragen, wobei die Konfigurationsdaten eine Funktionalität bzw. Konfiguration einer zu erstellenden anwendungsorientierten Software vorgeben. Ferner werden eine oder mehrere Programm-Komponenten aus einer Vielzahl von Programm-Komponenten, die lokal innerhalb des Computersystems hinterlegt sind, in Abhängigkeit von der durch die Konfigurationsdaten vorgegebenen Funktionalität bzw. Konfiguration herangezogen. Anhand der lokal herangezogenen Programm-Komponenten wird die anwendungsorientierte Software in Abhängigkeit von der durch die Konfigurationsdaten vorgegebenen Funktionalität bzw. Konfiguration erstellt. Schließlich wird die erstellte anwendungsorientierte Software in eine Betriebsumgebung im Computersystem zum Bereitstellen einer gewünschten anwendungsorientierten Funktionalität eingebettet.

Ein derartiges Verfahren hat gegenüber herkömmlichen Lösungen den Vorteil, dass eine anwendungsorientierte Software für eine gewünschte anwendungsorientierte Funktionalität innerhalb eines Computersystems aus Programm-Komponenten erstellt werden kann, die (ausschließlich bzw. vollständig) lokal innerhalb des Computersystems hinterlegt und verfügbar sind. Die auf das Computersystem übertragenen Konfigurationsdaten können z.B. von einem Erstellungs-System zum automatisierten Erstellen der gewünschten Software innerhalb des Computersystems herangezogen werden. Die Konfigurationsdaten können eine gewünschte Konfiguration beziehungsweise einen gewünschten Funktionsumfang/Funktionalität einer zu erstellenden anwendungsorientierten Software vorgeben. Anhand der Konfigurationsdaten können dann notwendige, erforderliche beziehungsweise geeignete Programm-Komponenten aus der Vielzahl der lokal innerhalb des Computersystems hinterlegten Programm-Komponenten herangezogen und zur anwendungsorientierten Software zusammengestellt werden.

Das Verfahren kann derart implementiert sein, dass vorteilhaft sämtliche Programm-Komponenten lokal innerhalb des Computersystems hinterlegt sind, die für die Erstellung der anwendungsorientierten Software notwendig sind. Auf diese Weise bedarf es keinerlei Programm-Komponenten, die über eine Datenverbindung mit einem entfernten Hintergrund-System (z.B. Entwicklungs-Computersystem) auf das Computersystem geladen werden müssen. Somit müssen ausschließlich die Konfigurationsdaten auf das Computersystem übertragen werden, um ein gesteuertes und automatisiertes Zusammenstellen der erforderlichen Programm-Komponenten zum Erstellen der letztendlichen Software vorzugeben beziehungsweise zu steuern.

Auf diese Weise hat das hier erläuterte Verfahren den Vorteil, dass eine anwendungsorientierte Software flexibel und variabel im Computersystem selbst zusammengestellt werden kann, ohne dass über eine externe Datenverbindung Bestandteile der Software, insbesondere Programm-Komponenten der Software, in größeren Datenmengen (zum Beispiel im Rahmen von mehreren Gigabyte) auf das Computersystem geladen werden müssen. Lediglich die Konfigurationsdaten müssen auf das Computersystem übertragen werden, wobei die Konfigurationsdaten eine vergleichsweise geringe Größe (zum Beispiel im Rahmen von Kilobyte oder Megabyte) umfassen. Eine derartige Übertragung ist auch bei sehr eingeschränkter Bandbreite schnell und einfach durchführbar. Ferner ist keine ständige Verbindung zwischen dem Computersystem und einem Hintergrund-System zur Datenübertragung für ein Erstellen der anwendungsorientierten Software notwendig. Lediglich die Konfigurationsdaten müssen über eine kurzzeitige (temporäre) Datenverbindung auf das Computersystem übertragen werden. Nach dem vollständigen Übertragen der Konfigurationsdaten kann das Erstellen der anwendungsorientierten Software innerhalb des Computersystems automatisiert ablaufen, ohne dass eine Datenverbindung zu einem entfernten Hintergrund-System weiter notwendig ist. Insbesondere für sogenannte Edge-Computing-Anwendungen ist das Verfahren somit sehr vorteilhaft.

In diversen Implementierungen des Verfahrens können die Konfigurationsdaten allgemein vorbestimmte Anweisungen, Definitionen, Regeln, Konfigurationen oder eine Kombination davon umfassen, die ein Heranziehen und Zusammenstellen der lokal innerhalb des Computersystems hinterlegten Programm-Komponenten zum Erstellen der anwendungsorientierten Software vorgeben. Insbesondere kann in den Konfigurationsdaten hinterlegt sein, welche Funktionalitäten die gewünschte zu erstellende Software aufweisen soll. Alternativ oder ergänzend können auch konkrete Angaben zu den erforderlichen Programm-Komponenten in den Konfigurationsdaten hinterlegt sein. Die Konfigurationsdaten können ein oder mehrere Key/Value-Paare umfassen, die die lokal innerhalb des Computersystems heranzuziehenden Programm-Komponenten zum Erstellen der anwendungsorientierten Software vorgeben. Derartige Key/Value Paare können z.B. einen bestimmten Programm-Stack betreffen, der die heranzuziehenden Programm-Komponenten bzw. entsprechende vorbereitete Bundles an Programm-Komponenten definiert. Alternativ oder ergänzend können die Konfigurationsdaten ein oder mehrere Key/Value-Paare umfassen, die eine Konfiguration der anwendungsorientierten Software vorgeben. Eine derartige Konfiguration kann z.B. eine Konfiguration von Netzwerk-Schnittstellen, eine Vergabe von IP-Adressen, Benutzerdaten, usw. umfassen.

In diversen Implementierungen des Verfahrens umfassen die Konfigurationsdaten ausschließlich nicht-ausführbare Daten, insbesondere keinen ausführbaren Programmcode oder keinen ausführbaren Befehlscode, geschweige denn ausführbare Programm-Dateien der anwendungsorientierten Software. Dies hat den großen Vorteil gegenüber herkömmlichen Lösungen, dass kein Programmcode als Bestandteil der anwendungsorientierten Software von außen auf das Computersystem übertragen werden muss, um die anwendungsorientierte Software schlussendlich im Computersystem erstellen zu können. Wie oben erläutert, ist vielmehr das Verfahren vorteilhaft derart implementiert, dass die zum Erstellen der Software erforderlichen ausführbaren Programm-Komponenten, insbesondere ausführbare Dateien, Skripte, Befehlscodes, Maschinencodes, und so weiter, vollständig lokal innerhalb des Computersystems hinterlegt sind.

Auf diese Weise ist das Verfahren gegenüber herkömmlichen Lösungen sehr sicher ausgestaltet, weil kein ausführbarer Programmcode auf das Computersystem übertragen wird, der manipuliert sein kann. Insofern können keine Manipulationen am Programmcode beziehungsweise Befehlscode der letztendlich erstellten anwendungsorientierten Software, z.B. das Einspielen von Schadcode, von außen vorgenommen werden. Im schlimmsten Fall sind die Konfigurationsdaten derart gewählt, dass ein Erstellen der gewünschten Software-Funktionalität fehlschlägt oder abgebrochen wird. Ein Einpflanzen von zusätzlichem oder verändertem, ausführbarem Programmcode in die zu erstellende Software ist jedoch über die Konfigurationsdaten hierbei nicht möglich.

Sämtliche Funktionalitäten beziehungsweise ausführbarer Programmcode oder Befehlscode sind hierbei ausschließlich lokal innerhalb des Computersystems hinterlegt. Auf diese Weise kann z.B. während eines initialen Einrichtens des Computersystems vorgegeben werden, in welchem Funktionsumfang welche Funktionalitäten einer zu erstellenden anwendungsorientierten Software erlaubt oder möglich sind. Das Verfahren bietet somit insbesondere für sicherheitskritische Anwendungen deutliche Vorteile gegenüber herkömmlichen Lösungen.

Die Konfigurationsdaten können zum Beispiel in einer Konfigurationsdatei zusammengefasst sein, die auf das Computersystem übertragen wird. Eine derartige Konfigurationsdatei kann zum Beispiel als Textdatei implementiert sein. Diese Textdatei kann z.B. in einer vorgegebenen Auszeichnungssprache wie XML oder YAML abgefasst sein. Eine Übertragung der Konfigurationsdaten auf das Computersystem kann zum Beispiel über ein Paketverwaltungs-System, zum Beispiel den sogenannten RPM Package Manager oder ähnliches, erfolgen.

In diversen Implementierungen des Verfahrens werden als Programm-Komponenten zum Erstellen der anwendungsorientierten Software ein Basis-Betriebssystem und eine oder mehrere Anwendungsprogramm-Dateien herangezogen. Diese sind ausschließlich lokal innerhalb des Computersystems hinterlegt. Das Basis-Betriebssystem und die eine oder mehreren Anwendungsprogramm-Dateien werden dabei zum Erstellen der anwendungsorientierten Software automatisiert zusammengestellt. Das hier genannte Basis-Betriebssystem kann zum Beispiel ein Linux-Kern sein. Die eine oder mehreren Anwendungsprogramm-Dateien können eigentliche anwendungsorientierte Funktionalitäten der zu erstellenden Software bereitstellen. Hier können je nach gewünschtem Anwendungsfall bestimmte Programm-Komponenten inkludiert sein. Die Anwendungsprogramm-Dateien können z.B. als Container-Dateien vorbereitet sein. Das Basis-Betriebssystem und/oder die eine oder mehreren Anwendungsprogramm-Dateien können als Image-Dateien im Computersystem abgelegt sein. Die Ablage und Verwaltung der Anwendungsprogramm-Dateien in Form von Container-Dateien kann gemäß einem Container-Verwaltungssystem erfolgen.

Eine erstellte anwendungsorientierte Software kann ein oder mehrere Software-Pakete beziehungsweise eine oder mehrere Software-Dateien umfassen, die das Basis-Betriebssystem und die eine oder mehreren Anwendungsprogramm-Dateien aufweisen. Dieser Gesamtkomplex kann automatisiert in einem Erstellungs-System, zum Beispiel einer hierfür vorgesehenen Building-Software, innerhalb des Computersystems erstellt werden. Die als Ergebnis erstellte Software kann in Form einer oder mehrerer Image-Dateien vorliegen. Diese können derart in eine Betriebsumgebung im Computersystem eingebettet werden, dass die anwendungsorientierte Software aus den einen oder mehreren Image-Dateien lokal im Computersystem ausgeführt beziehungsweise installiert und danach ausgeführt werden kann.

In diversen Implementierungen des Verfahrens wird die anwendungsorientierte Software als virtuelle Maschine erstellt, wobei die virtuelle Maschine innerhalb des Computersystems lokal ausgeführt wird. In diesen Implementierungen kann die anwendungsorientierte Software ein komplettes virtuelles Rechner-System mit einer oder mehreren gewünschten Funktionalitäten darstellen. Aufgrund einer Virtualisierung kann auf diese Weise das Computersystem in seiner Funktionsweise variabel und flexibel an gewünschte Funktionalitäten angepasst werden. Eine auf diese Weise erstellte virtuelle Maschine kann innerhalb des Computersystems einfach betrieben und gehandhabt werden. Auch vor dem Hintergrund einer sicheren Ausführung der erstellten Software bietet eine derartige Virtualisierung Vorteile.

Die obige Aufgabe wird gemäß einem zweiten Aspekt durch ein Computersystem zum Bereitstellen einer gewünschten anwendungsorientierten Funktionalität gemäß Patentanspruch 7 gelöst. Weiterbildungen und spezielle Ausführungsformen sind in den Unteransprüchen offenbart.

Innerhalb des Computersystems ist eine Vielzahl von Programm-Komponenten zum Erstellen einer anwendungsorientierten Software lokal hinterlegt. Das Computersystem weist ein Erstellungs-System zum automatisierten Erstellen der anwendungsorientierten Software anhand einer oder mehrerer lokal herangezogenen Programm-Komponenten aus der Vielzahl der lokal hinterlegten Programm-Komponenten auf. Ferner weist das Computersystem eine Schnittstelle für eine Datenverbindung mit einem entfernten Konfigurations-Server auf. Das Computersystem ist eingerichtet, über die Datenverbindung Konfigurationsdaten zum Erstellen der anwendungsorientierten Software vom Konfigurations-Server zu beziehen. Das Erstellungs-System ist eingerichtet, die anwendungsorientierte Software anhand der einen oder mehreren lokal herangezogenen Programm-Komponenten in Abhängigkeit von bezogenen Konfigurationsdaten zu erstellen.

Auch ein derartiges Computersystem weist die im Zusammenhang mit dem oben erläuterten Verfahren genannten Vorteile auf. Das Computersystem kann vorteilhaft derart eingerichtet sein, dass sämtliche zum Erstellen der anwendungsorientierten Software erforderlichen Programm-Komponenten lokal im Computersystem hinterlegt sind. Das bedeutet, dass die anwendungsorientierte Software ausschließlich aus Programm-Komponenten erstellt werden kann, die im Computersystem vorbereitet sind, ohne dass eine oder mehrere Programm-Komponenten über eine Datenverbindung mit einem entfernten System (zum Beispiel Daten-Server oder Konfigurations-Server) auf das Computersystem geladen werden müssen.

In diversen Ausführungsformen des Computersystems ist das Erstellungs-System derart eingerichtet, dass das Erstellen der anwendungsorientierten Software automatisiert unter Heranziehen der auf das Computersystem geladenen Konfigurationsdaten erfolgt. Insbesondere kann das Erstellungs-System derart eingerichtet sein, dass es eine oder mehrere Programm-Komponenten lokal im Computersystem heranzieht und aufgrund von vorbestimmten Anweisungen, Definitionen, Regeln, Konfigurationen oder einer Kombination davon, die innerhalb der Konfigurationsdaten (z.B. in Form von Key/Value-Paaren) vorliegen, die lokal herangezogenen Programm-Komponenten zur anwendungsorientierten Software zusammenstellt. Die Programm-Komponenten und die Konfigurationsdaten können derart beschaffen sein, dass ein Programmcode beziehungsweise Befehlscode der erstellten anwendungsorientierten Software, insbesondere ein ausführbarer Programmcode beziehungsweise ausführbarer Befehlscode, ausschließlich vermittels der lokal vorliegenden Programm-Komponenten zusammengestellt beziehungsweise erstellt wird. In diesem Fall umfassen die Konfigurationsdaten ausschließlich nicht-ausführbare Daten beziehungsweise keinerlei ausführbaren Programmcode oder ausführbaren Befehlscode als Bestandteil der anwendungsorientierten Software.

In diversen Ausführungsformen des Computersystems sind als Programm-Komponenten zum Erstellen der anwendungsorientierten Software innerhalb des Computersystems ein oder mehrere Basis-Betriebssysteme sowie eine oder mehrere Anwendungsprogramm-Dateien hinterlegt. Das zumindest eine Basis-Betriebssystem kann zum Beispiel ein Linux-System oder ähnliches sein. Die eine oder mehreren Anwendungsprogramm-Dateien können vorbestimmte Programm-Komponenten zum Erstellen der anwendungsorientierten Software umfassen. Die Anwendungsprogramm-Dateien können als Container-Dateien vorbereitet sein. Im Übrigen wird auf die obigen Erläuterungen im Zusammenhang mit dem oben erläuterten Verfahren verwiesen.

In diversen Implementierungen ist das Computersystem ein Edge-Computersystem. Das Edge-Computersystem kann zum Beispiel in einer Maschine, Anlage oder einem Gesamtsystem eingebettet sein und zum Überwachen der Maschine, Anlage oder des Gesamtsystems eingerichtet sein. Zum Beispiel kann über das Edge-Computersystem eine Vorverarbeitung von Sensordaten durchgeführt werden, die über einen oder mehrere Sensoren der Maschine, Anlage oder des Gesamtsystems erfasst werden.

Das Computersystem ist vorteilhaft zur Durchführung eines Verfahrens gemäß der oben erläuterten Art eingerichtet.

Das hier erläuterte Computersystem kann zum Beispiel in einer Computerinfrastruktur eingesetzt werden, die neben dem Computersystem einen entfernten Konfigurations-Server aufweist. Der Konfigurations-Server hält die Konfigurationsdaten der oben erläuterten Art vor und kann mit dem Computersystem zumindest zeitweise über eine Datenverbindung zum Einspielen der Konfigurationsdaten in das Computersystem verbunden werden. Diese Computerinfrastruktur kann zum Beispiel das Computersystem als Edge-Computersystem aufweisen, wobei der Konfigurations-Server ein Server innerhalb eines Rechenzentrums ist. Das Edge-Computersystem kann über die Datenverbindung zumindest zeitweise mit dem Rechenzentrum verbunden werden. Das Rechenzentrum kann zum Beispiel vorbestimmte Cloud-Dienste zur Verfügung stellen. Die Datenverbindung kann derart eingerichtet beziehungsweise konfiguriert sein, dass sie lediglich zum Einspielen der Konfigurationsdaten vom Konfigurations-Server in das Computersystem aufgebaut wird und nach Übertragen der Konfigurationsdaten in das Computersystem abgebaut beziehungsweise beendet wird. Insbesondere in Anwendungsfällen mit einer geringen Bandbreite muss die Datenverbindung somit nicht dauerhaft zwischen dem Konfigurations-Server und dem Computersystem aufgebaut bleiben. Die Konfigurationsdaten sind vorteilhaft derart beschaffen, dass sie eine relativ geringe Datengröße im Bereich von Kilobyte oder Megabyte aufweisen. Auf diese Weise ist trotz geringer Bandbreite einer Datenverbindung eine relativ rasche Übertragung der Konfigurationsdaten zwischen dem Konfigurations-Server und dem Computersystem möglich. Größere Datenmengen müssen daher über die Datenverbindung nicht übertragen werden. Wie bereits oben erläutert, kann das Computersystem vielmehr derart implementiert sein, dass sämtliche Programm-Komponenten zum Erstellen der anwendungsorientierten Software lokal innerhalb des Computersystems hinterlegt sind. Insofern müssen keine Programm-Komponenten von außen über die Datenverbindung in das Computersystem hochgeladen werden. Auf diese Weise ist eine rasche, flexible und sichere Erstellung einer anwendungsorientierten Software vermittels des Computersystems möglich.

Die Erfindung wird nachfolgend anhand eines Ausführungsbeispieles unter Zuhilfenahme mehrerer Zeichnungen näher erläutert.

Es zeigen:
Figur 1 eine schematisierte Darstellung einer Computerinfrastruktur mit einem Computersystem und einem Konfigurations-Server,
Figur 2 eine schematisierte Darstellung eines Computersystems, wie es in Figur 1 Anwendung finden kann.

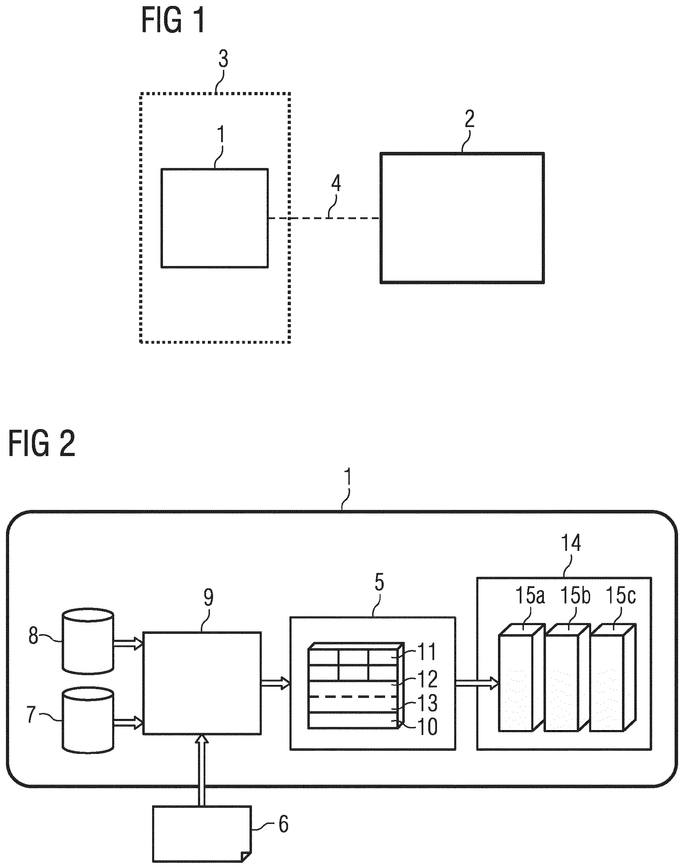

Figur 1 zeigt eine Computerinfrastruktur mit einem Computersystem 1, das innerhalb eines zu überwachenden Systems 3 eingerichtet ist. Das zu überwachende System 3 kann zum Beispiel eine zu überwachende Maschine, Anlage, Produktionssystem und so weiter sein. Das Computersystem 1 ist beispielsweise als sogenanntes Edge-Computersystem eingerichtet. Das Computersystem 1 ist beispielsweise eingerichtet, das System 3 zu überwachen, insbesondere Sensordaten des Systems 3 zu sammeln, auszuwerten oder ähnliches. Das Computersystem 1 kann ferner eingerichtet sein, das System 3 zu steuern. Hier sind vielerlei Anwendungsmöglichkeiten denkbar.

Das Computersystem 1 ist über eine Datenverbindung 4 mit einem entfernt liegenden Konfigurations-Server 2 verbunden. Die Datenverbindung 4 kann als dauerhafte Datenverbindung oder alternativ als zeitweise (temporäre) Datenverbindung eingerichtet sein. Die Datenverbindung 4 dient zum Übertragen und Austauschen von Daten zwischen dem Computersystem 1 und dem Konfigurations-Server 2.

Der Konfigurations-Server 2 kann zum Beispiel innerhalb eines Rechenzentrums eingerichtet sein und bestimmte Dienste, insbesondere Cloud-Dienste, für das Computersystem 1 zur Verfügung stellen. Insbesondere bei Anwendungen des Computersystems 1 als Edge-Computersystem kann das Computersystem 1 eine Rechenperformance am zu überwachenden System 3 bereitstellen, während eine Hintergrundperformance durch den Konfigurations-Server 2 bzw. das Rechenzentrum bereitgestellt wird.

Zum Bereitstellen einer gewünschten anwendungsorientierten Funktionalität innerhalb des Computersystems 1 ist das Einrichten einer anwendungsorientierten Software innerhalb des Computersystems 1 erforderlich. Ein Bereitstellen dieser anwendungsorientierten Software innerhalb des Computersystems 1 wird anhand von Figur 2 nachfolgend näher erläutert.

Figur 2 zeigt eine schematisierte Ansicht einer Ausführungsform eines Computersystems 1 gemäß der Erfindung, wie es beispielsweise in der Computerinfrastruktur gemäß Figur 1 Anwendung finden kann.

Nachfolgend werden strukturelle Merkmale bzw. Verfahrensschritte zum Bereitstellen einer gewünschten anwendungsorientierten Funktionalität innerhalb des Computersystems 1 erläutert.

Das Computersystem 1 gemäß Figur 2 weist einen Basis-Betriebssystem-Speicher 7 sowie einen Anwendungsprogramm-Datei-Speicher 8 auf. Innerhalb des Basis-Betriebssystem-Speichers 7 sind ein oder mehrere Basis-Betriebssysteme hinterlegt. Die im Speicher 7 hinterlegten Basis-Betriebssysteme können zum Beispiel als sogenannte Image-Dateien gespeichert sein. Im Anwendungsprogramm-Datei-Speicher 8 sind eine oder mehrere Anwendungsprogramm-Dateien hinterlegt. Die im Speicher 8 hinterlegten Anwendungsprogramm-Dateien sind zum Beispiel als Container-Dateien hinterlegt. Der Speicher 8 kann zum Beispiel ein Anwendungsprogramm-Datei-Verzeichnis aufweisen, das eine Verknüpfung mit den entsprechenden Anwendungsprogramm-Dateien umfasst. Eine Verwaltung und Struktur der Anwendungsprogramm-Dateien kann zum Beispiel über eine Container-Verwaltung bereitgestellt werden.

Die in den Speichern 7 und 8 hinterlegten Programm-Komponenten (Basis-Betriebssystem und Anwendungsprogramm-Dateien) sind auf diese Weise vollständig und ausschließlich lokal im Computersystem 1 hinterlegt. Aus den Programm-Komponenten innerhalb der Speicher 7 und 8 kann variabel und flexibel eine anwendungsorientierte Software je nach gewünschter Funktionalität erstellt werden. Hierzu stellen die in den Speichern 7 und 8 hinterlegten Programm-Komponenten entsprechende variable Funktionalitäten bereit. Zum Erstellen einer anwendungsorientierten Software weist das Computersystem 1 ein Erstellungs-System 9 auf. Das Erstellungs-System 9 umfasst z.B. eine Building-Software zum Erstellen einer anwendungsorientierten Software 5 aus ausgewählten Programm-Komponenten aus der Vielzahl der in den Speichern 7 und 8 hinterlegten Programm-Komponenten. Das Erstellungs-System 9 ist derart eingerichtet, dass ein Erstellen der anwendungsorientierten Software 5 automatisiert abläuft.

Zum Erstellen der anwendungsorientierten Software 5 werden zunächst Konfigurationsdaten 6 auf das Computersystem 1 übertragen. Eine derartige Übertragung kann zum Beispiel über eine Datenverbindung 4 zwischen dem Computersystem 1 und einem Konfigurations-Server 2 gemäß Figur 1 erfolgen. Siehe hierzu obige Erläuterungen. Die Konfigurationsdaten 6 können zum Beispiel als Textdatei in einer bestimmten Auszeichnungssprache, z.B. XML oder YAML, vorliegen. Die Konfigurationsdaten 6 umfassen z.B. eine Vielzahl von Key/Value-Paaren, die eine gewünschte Funktionalität der zu erstellenden anwendungsorientierten Software 5 definieren. Die Key/Value-Paare innerhalb der Konfigurationsdaten 6 geben die lokal innerhalb des Computersystems 1 aus den Speichern 7 und 8 heranzuziehenden Programm-Komponenten zum Erstellen der jeweiligen anwendungsorientierten Software 5 vor. Ferner können die Key/Value-Paare innerhalb der Konfigurationsdaten 6 (dies können dieselben Key/Value-Paare oder andere Key/Value-Paare sein) eine Konfiguration der zu erstellenden anwendungsorientierten Software 5 vorgeben. Folglich können die Konfigurationsdaten 6 einerseits Vorgaben über die heranzuziehenden Programm-Komponenten und andererseits Vorgaben über die Konfiguration der letztendlich zu erstellenden Software 5 umfassen. Derartige Vorgaben können zum Beispiel bestimmte Parameter und entsprechende Werte zur Definition der für die Software 5 notwendigen Komponenten, wie zum Beispiel Schnittstellen, Netzwerk-Parameter, Benutzerdaten, und so weiter sein.

Sobald die Konfigurationsdaten 6 auf das Computersystem 1 übertragen worden sind, können diese im Erstellungs-System 9 gelesen und interpretiert werden. Hierzu kann im Erstellungs-System 9 zum Beispiel ein Parser implementiert sein, der die als Auszeichnungssprache 6 abgefasste Textdatei, die die Konfigurationsdaten 6 enthält, interpretiert. Somit erkennt das Erstellungs-System 9 automatisiert, welche Programm-Komponenten aus der Vielzahl der in den Speichern 7 und 8 hinterlegten Programm-Komponenten zum Erstellen der anwendungsorientierten Software 5 heranzuziehen sind. Die erforderlichen Programm-Komponenten können automatisiert vom Erstellungs-System 9 aus den Speichern 7 und 8 geladen werden und in Abhängigkeit von den Konfigurationsdaten 6 zusammengestellt werden. Zum Beispiel geben die Konfigurationsdaten 6 einen bestimmten Software-Stack beziehungsweise Programm-Stack an erforderlichen Programm-Komponenten zur Realisierung einer gewünschten Funktionalität vor. Anhand dieser Angaben stellt das Erkennungs-System 9 die erforderlichen Programm-Komponenten zusammen.

Gemäß der Konstellation in Figur 2 umfassen die Konfigurationsdaten 6 keinerlei ausführbare Daten. Sämtlicher ausführbarer Programmcode zum Erstellen der anwendungsorientierten Software 5 ist durch die Programm-Komponenten vorgegeben, die in den Speichern 7 und 8 im Computersystem 1 lokal hinterlegt sind. Auf diese Weise ist das Erstellen der anwendungsorientierten Software 5 gemäß Figur 2 besonders sicher, da kein ausführbarer Programmcode über die Konfigurationsdaten 6 von außen in das Computersystem 1 eingespielt wird. Auf diese Weise wird verhindert, dass zum Erstellen der anwendungsorientierten Software 5 möglicherweise manipulierter Programmcode (Schadcode) über die Konfigurationsdaten 6 in das Computersystem 1 gelangt. Vielmehr ist durch die in den Speichern 7 und 8 vorhinterlegten Programm-Komponenten die Programmfunktionalität der anwendungsorientierten Software 5 vorgegeben. Verschiedene anwendungsorientierte Programme 5 können dabei aus einer Vielzahl von Programm-Komponenten, die in den Speichern 7 und 8 hinterlegt sind, zusammengestellt werden. Auf diese Weise ist ein flexibles, aber dennoch sicheres Erstellen einer anwendungsorientierten Software 5 gewährleistet.

Dadurch, dass sämtliche Programm-Komponenten zum Erstellen der anwendungsorientierten Software 5 lokal innerhalb der Speicher 7 und 8 im Computersystem 1 vorhinterlegt sind und ausschließlich Konfigurationsdaten 6 zum vorgegebenen und gesteuerten Zusammenstellen der Programm-Komponenten in das Computersystem 1 eingespielt werden müssen, können die Konfigurationsdaten 6 eine im Vergleich zu den Programm-Komponenten und die erstellte Software 5 sehr geringe Datengröße (Dateigröße) aufweisen. Die Konfigurationsdaten umfassen zum Beispiel eine Größe von zirka 500 Kilobyte bis ca. 1 Megabyte, während die in den Speichern 7 und 8 hinterlegten Programm-Komponenten beziehungsweise die letztendlich erstellte anwendungsorientierte Software 5 im Bereich von einigen Gigabyte, zum Beispiel insgesamt 6 Gigabyte, aufweisen können.

Ein Vorteil des Computersystems 1 und des Verfahrens zum Erstellen der anwendungsorientierten Software 5 gemäß Figur 2 besteht somit darin, dass keine größeren Datenmengen über eine Datenverbindung zwischen dem Computersystem 1 und einem entfernten Computersystem, zum Beispiel dem Konfigurations-Server 2 gemäß Figur 1, übertragen werden müssen. Vielmehr müssen lediglich über eine (zumindest zeitweise) aufgebaute Datenverbindung 4 (vergleiche Figur 1) die Konfigurationsdaten 6 in das Computersystem 1 eingespielt werden. Hierzu kann die Datenverbindung 4 eine relativ geringe Bandbreite aufweisen, weil die Konfigurationsdaten 6, wie oben erläutert, lediglich ein sehr kleines Datenvolumen ausmachen. Auf diese Weise kann je nach gewünschter Funktionalität flexibel eine anwendungsorientierte Software 5 vermittels lokal hinterlegter Programm-Komponenten automatisiert innerhalb des Computersystems 1 über das Erstellungs-System 9 in Abhängigkeit von den Konfigurationsdaten 6 erstellt werden, ohne dass es einer Übertragung eines hohen Datenvolumens von Programm-Komponenten auf das Computersystem 1 (Upload) bedarf. Ferner ist das im Zusammenhang mit Figur 2 oben erläuterte Vorgehen sehr sicher. Insbesondere in Anwendungsfällen des Computersystems 1 an extremen Einsatzorten, zum Beispiel in exponierter Lage, in der das Computersystem 1 starken Umwelteinflüssen ausgesetzt ist, ist das oben erläuterte Vorgehen vorteilhaft.

Als Ergebnis einer Zusammenstellung vorbestimmter Programm-Komponenten in Abhängigkeit von den Konfigurationsdaten 6 stellt das Erstellungs-System 9 schlussendlich die Software 5 bereit. Gemäß Figur 2 umfasst die Software 5 Daten einer Vielzahl von Anwendungsprogramm-Dateien, die zum Beispiel in Form von Containern 11 eingebettet wurden. Daneben umfasst die Software 5 in der Ausführungsform gemäß Figur 2 eine Kompositions-Datei 12, Konfigurationsdaten 13 sowie ein Basis-Betriebssystems 10. Die Container 11 wurden aus dem Speicher 8 bezogen, das Basis-Betriebssystem 10 wurde aus dem Speicher 7 bezogen. Die Kompositions-Datei 12 wurde im Rahmen des Erstellens der Software 5 automatisiert erstellt und kann als Textdatei in einer vorgegebenen Auszeichnungssprache vorliegen. Die Kompositions-Datei 12 definiert zum Beispiel die Verknüpfung der einzelnen Container 11 und deren Steuerung zum Bereitstellen der gewünschten Funktionalität. Die Kompositions-Datei 12 kann dabei zum Beispiel einen Teil der Konfigurationsdaten 6 umfassen. Ein anderer Teil der Konfigurationsdaten 6 kann in den weiteren Konfigurationsdaten 13 enthalten sein. Darin können zum Beispiel Netzwerk-Parameter, Netzwerk-Schnittstellen, Benutzerdaten, virtuelle Laufwerke, und so weiter definiert sein. Die Container 11 bilden zusammen mit der Kompositions-Datei 12 ein Container-System zum Bereitstellen der gewünschten Applikationen, die über die weiteren Konfigurationsdaten 13 und das Basis-Betriebssystem 10 (als Basisstruktur der Software 5) gesteuert werden. Die erstellte Software 5 kann zum Beispiel in Form einer Image-Datei (zum Beispiel "ISO" oder "QCOW2") vorliegen. Die erstellte Software 5 kann schlussendlich in eine Betriebsumgebung 14 innerhalb des Computersystems 1 eingebettet werden. Die Betriebsumgebung 14 stellt zum Beispiel eine physische Hardware mit einem Speicher sowie eine Überwachungs- und Steuerungssoftware (z.B. einen Hypervisor) zur Verfügung. Ferner sind in der Ausführungsform gemäß Figur 2 insgesamt drei Speicherbereiche 15a bis 15c innerhalb der Betriebsumgebung 14 eingerichtet, in denen jeweils die erstellte Software 5 gespeichert bzw. installiert werden kann. Die Software 5 kann in Form einer virtuellen Maschine erstellt sein. Diese kann in einem der Speicherbereiche 15a bis 15c gespeichert beziehungsweise entsprechend installiert werden, sodass die virtuelle Maschine als lauffähige Software innerhalb der Betriebsumgebung 14 ausgeführt werden kann. Auf diese Weise ist eine anwendungsorientierte Software 5 im Computersystem 1 je nach gewünschter Funktionalität erstellbar.

In alternativen Ausführungen können Programm-Komponenten innerhalb des Speichers 8 als Anwendungsprogramme ohne Zuhilfenahme einer Container-Verwaltung der oben erläuterten Art hinterlegt sein. In diesem Fall werden die Anwendungsprogramme mit einem aus dem Speicher 7 bezogenen Basis-Betriebssystem im Erstellungs-System 9 zur Software 5 zusammengestellt, ohne dass es zum Beispiel einer Kompositions-Datei 12 bedarf. Vielmehr können die einzelnen Anwendungsprogramme gemeinsam mit dem Basis-Betriebssystem und entsprechenden Konfigurationsdaten 13 in einer Software-Datei 5 (zum Beispiel Image-Datei) zusammengestellt werden.

In alternativen Ausführungsformen kann die erstellte Software 5 auch eine Vielzahl von Dateien aufweisen.

In weiteren alternativen Ausführungen können in den Speichern 7 beziehungsweise 8 bereits vorhinterlegte zusammengestellte Software-Pakete (Bundles) hinterlegt sein, die entsprechende Funktionalitäten einer Software 5 bereitstellen. In diesem Fall kann das Erstellungs-System 9 derart implementiert sein, dass anhand der Konfigurationsdaten 6 ein geeignetes Software-Paket aus den Speichern 7 beziehungsweise 8 ausgewählt wird und als Software 5, gegebenenfalls ergänzt über Konfigurationsdaten 13, bereitgestellt wird. Es ist auch möglich, lediglich einen Speicher 7 oder 8 bereitzustellen, in dem entsprechende Programm-Komponenten hinterlegt sind.

Die Ausführungsformen der Figuren 1 und 2 sind lediglich beispielhaft gewählt.

### Bezugszeichenliste

- 1: Computersystem
- 2: Konfigurations-Server
- 3: zu überwachendes System
- 4: Datenverbindung
- 5: anwendungsorientierte Software
- 6: Konfigurationsdaten
- 7: Basis-Betriebssystem-Speicher
- 8: Anwendungsprogramm-Datei-Speicher
- 9: Erstellungs-System
- 10: Basis-Betriebssystem
- 11: Container
- 12: Kompositions-Datei
- 13: Konfigurationsdaten
- 14: Betriebsumgebung
- 15a, 15b, 15c: Speicherbereich

## Patentansprüche

1. Verfahren zum Bereitstellen anwendungsorientierter Software (5) für eine gewünschte anwendungsorientierte Funktionalität innerhalb eines Computersystems (1), umfassend die folgenden Schritte:
- Übertragen von Konfigurationsdaten (6) auf das Computersystem (1), wobei die Konfigurationsdaten (6) eine Funktionalität einer zu erstellenden anwendungsorientierten Software (5) vorgeben, wobei die zu erstellende anwendungsorientierte Software (5) Daten einer Vielzahl von Anwendungsprogramm-Dateien, ein Basis-Betriebssystem (10) und weitere Konfigurationsdaten (13) umfasst,
- Heranziehen mehrerer Programm-Komponenten aus einer Vielzahl von Programm-Komponenten, die lokal innerhalb des Computersystems (1) hinterlegt sind, in Abhängigkeit von der durch die Konfigurationsdaten (6) vorgegebenen Funktionalität, wobei die Konfigurationsdaten (6) Vorgaben über die heranzuziehenden Programm-Komponenten umfassen,
- Erstellen der anwendungsorientierten Software (5) innerhalb des Computersystems (1) anhand der lokal herangezogenen Programm-Komponenten in Abhängigkeit von der durch die Konfigurationsdaten (6) vorgegebenen Funktionalität, wobei die lokal herangezogenen Programm-Komponenten gemeinsam mit den weiteren Konfigurationsdaten (13) zur anwendungsorientierten Software (5) zusammengestellt werden, wobei die Konfigurationsdaten (6) des Weiteren Vorgaben über eine Konfiguration der zu erstellenden Software (5) umfassen, ein Teil der Konfigurationsdaten (6) in den weiteren Konfigurationsdaten (13) enthalten ist, und die erstellte anwendungsorientierte Software (5) in Form einer Image-Datei vorliegt, sowie
- Einbetten der erstellten Image-Datei in eine Betriebsumgebung (14) im Computersystem (1) zum Bereitstellen der gewünschten anwendungsorientierten Funktionalität.

2. Verfahren nach Anspruch 1, wobei die Konfigurationsdaten (6) ein oder mehrere Key/Value-Paare umfassen, die die lokal innerhalb des Computersystems (1) heranzuziehenden Programm-Komponenten zum Erstellen der anwendungsorientierten Software (5) vorgeben.

3. Verfahren nach Anspruch 1 oder 2, wobei die Konfigurationsdaten (6) ein oder mehrere Key/Value-Paare umfassen, die die Konfiguration der anwendungsorientierten Software (5) vorgeben.

4. Verfahren nach einem der Ansprüche 1 bis 3, wobei die Konfigurationsdaten (6) ausschließlich nicht-ausführbare Daten umfassen.

5. Verfahren nach einem der Ansprüche 1 bis 4, wobei als Programm-Komponenten zum Erstellen der anwendungsorientierten Software (5) ein Basis-Betriebssystem (10) und eine oder mehrere Anwendungsprogramm-Dateien herangezogen werden, die ausschließlich lokal innerhalb des Computersystems (5) hinterlegt sind, wobei das Basis-Betriebssystem (10) und die Anwendungsprogramm-Dateien zum Erstellen der anwendungsorientierten Software (5) automatisiert zusammengestellt werden.

6. Verfahren nach einem der Ansprüche 1 bis 5, wobei die anwendungsorientierte Software (5) als virtuelle Maschine erstellt wird und die virtuelle Maschine innerhalb des Computersystems (1) lokal ausgeführt wird.

7. Computersystem (1) zum Bereitstellen einer gewünschten anwendungsorientierten Funktionalität,
wobei innerhalb des Computersystems (1) eine Vielzahl von Programm-Komponenten zum Erstellen einer anwendungsorientierten Software (5) lokal hinterlegt ist, wobei das Computersystem (1) ein Erstellungs-System (9) aufweist zum automatisierten Erstellen der anwendungsorientierten Software (5) anhand mehrerer Programm-Komponenten, die in Abhängigkeit von einer durch Konfigurationsdaten (6) vorgegebenen Funktionalität lokal aus der Vielzahl der lokal hinterlegten Programm-Komponenten herangezogenen werden,
wobei die zu erstellende anwendungsorientierte Software (5) Daten einer Vielzahl von Anwendungsprogramm-Dateien, ein Basis-Betriebssystem (10) und weitere Konfigurationsdaten (13) umfasst,
wobei das Computersystem (1) eine Schnittstelle für eine Datenverbindung (4) mit einem entfernten Konfigurations-Server (2) aufweist,
wobei das Computersystem (1) eingerichtet ist über die Datenverbindung (4) die Konfigurationsdaten (6) zum Erstellen der anwendungsorientierten Software (5) vom Konfigurations-Server (2) zu beziehen, wobei die Konfigurationsdaten (6) Vorgaben über die heranzuziehenden Programm-Komponenten und Vorgaben über eine Konfiguration der zu erstellenden Software (5) umfassen, und
wobei das Erstellungs-System (9) eingerichtet ist die anwendungsorientierte Software (5) innerhalb des Computersystems (1) anhand der mehreren lokal herangezogenen Programm-Komponenten in Abhängigkeit von der durch die bezogenen Konfigurationsdaten (6) vorgegebenen Funktionalität zu erstellen, wobei die lokal herangezogenen Programm-Komponenten gemeinsam mit den weiteren Konfigurationsdaten (13) zur anwendungsorientierten Software (5) zusammengestellt werden, ein Teil der Konfigurationsdaten (6) in den weiteren Konfigurationsdaten (13) enthalten ist, und die erstellte anwendungsorientierte Software (5) in Form einer Image-Datei vorliegt.

8. Computersystem (1) nach Anspruch 7, wobei als Programm-Komponenten zum Erstellen der anwendungsorientierten Software (5) innerhalb des Computersystems (1) ein oder mehrere Basis-Betriebssysteme (10) sowie eine oder mehrere Anwendungsprogramm-Dateien hinterlegt sind.

9. Computersystem (1) nach Anspruch 7 oder 8, wobei das Erstellungs-System (9) eingerichtet ist die anwendungsorientierte Software (5) in Form einer virtuellen Maschine zu erstellen.

10. Computersystem (1) nach einem der Ansprüche 7 bis 9, wobei das Computersystem (1) ein Edge-Computersystem ist, das eingerichtet ist, in einer Maschine, Anlage oder einem Gesamtsystem eingebettet zu sein, und das zum Überwachen der Maschine, Anlage oder des Gesamtsystems eingerichtet ist und zur Durchführung eines Verfahrens gemäß einem der Ansprüche 1 bis 6 eingerichtet ist.

11. Computerinfrastruktur mit einem Computersystem (1) gemäß einem der Ansprüche 7 bis 10 und einem entfernten Konfigurations-Server (2), wobei der Konfigurations-Server (2) die Konfigurationsdaten (6) vorhält und mit dem Computersystem (1) zumindest zeitweise über eine Datenverbindung (4) verbunden werden kann zum Einspielen der Konfigurationsdaten (6) in das Computersystem (1).

## Claims

1. A method of providing application-oriented software (5) for a desired application-oriented functionality within a computer system (1), comprising the following steps:
- Transferring configuration data (6) to the computer system (1), the configuration data (6) specifying a functionality of an application-oriented software (5) to be created, the application-oriented software (5) to be created comprising data of a plurality of application program files, a basic operating system (10) and further configuration data (13),
- Calling up a plurality of program components from a plurality of program components, which are stored locally within the computer system (1), dependent on the functionality specified by the configuration data (6), wherein the configuration data (6) comprise specifications about the program components to be called up,
- Creating the application-oriented software (5) within the computer system (1) using the locally called up program components dependent on the functionality specified by the configuration data (6), the locally called up program components being put together with the further configuration data (13) as the application-oriented software (5), the configuration data (6) furthermore comprising specifications relating to a configuration of the software (5) to be created, a part of the configuration data (6) being comprised in the further configuration data (13), and the application-oriented software (5) created being present in the form of a disk image, and
- Embedding the created disk image in an operating environment (14) in the computer system (1) to provide the desired application-oriented functionality.

2. The method according to claim 1, wherein the configuration data (6) comprise one or more key/value pairs, which specify the program components to be called up locally within the computer system (1) for creating the application-oriented software (5).

3. The method according to claim 1 or 2, wherein the configuration data (6) comprise one or more key/value pairs, which specify the configuration of the application-oriented software (5).

4. The method according to any one of claims 1 to 3, wherein the configuration data (6) comprises exclusively non-executable data.

5. The method according to one of claims 1 to 4, wherein a basic operating system (10) and one or more application program files, which are stored exclusively locally within the computer system (5), are called up as program components for creating the application-oriented software (5), wherein the basic operating system (10) and the application program files for creating the application-oriented software (5) are put together in an automated manner.

6. The method according to any one of claims 1 to 5, wherein the application-oriented software (5) is created as a virtual machine and the virtual machine is executed locally within the computer system (1).

7. A computer system (1) for providing a desired application-oriented functionality,
wherein a plurality of program components for creating application-oriented software (5) are stored locally within the computer system (1),
wherein the computer system (1) has a creation system (9) for the automated creation of the application-oriented software (5) on the basis of a plurality of program components which are called up locally from the plurality of locally stored program components dependent on a functionality specified by configuration data (6),
wherein the application-oriented software (5) to be created comprises data of a plurality of application program files, a basic operating system (10) and further configuration data (13),
wherein the computer system (1) has an interface for a data connection (4) with a remote configuration server (2),
the computer system (1) being configured to obtain the configuration data (6) for creating the application-oriented software (5) from the configuration server (2) via the data connection (4), the configuration data (6) comprising specifications about the program components to be called up and specifications about a configuration of the software (5) to be created, and
wherein the creation system (9) is configured to create the application-oriented software (5) within the computer system (1) on the basis of the plurality of locally called up program components dependent on the functionality specified by the obtained configuration data (6), wherein the locally used program components are put together with the further configuration data (13) as the application-oriented software (5), a part of the configuration data (6) is comprised in the further configuration data (13), and the created application-oriented software (5) is present in the form of a disk image.

8. The computer system (1) according to claim 7, wherein one or more basic operating systems (10) and one or more application program files are stored as program components for creating the application-oriented software (5) within the computer system (1).

9. The computer system (1) according to claim 7 or 8, wherein the creation system (9) is configured to create the application-oriented software (5) in the form of a virtual machine.

10. The computer system (1) according to any one of claims 7 to 9, wherein the computer system (1) is an edge computer system which is configured to be embedded in a machine, installation or overall system and which is configured to monitor the machine, installation or overall system and is configured to perform the method according to any one of claims 1 to 6.

11. A computer infrastructure with a computer system (1) according to one of claims 7 to 10 and a remote configuration server (2), wherein the configuration server (2) holds the configuration data (6) and can be connected to the computer system (1) at least temporarily via a data connection (4) for importing the configuration data (6) into the computer system (1).

## Revendications

1. Procédé de fourniture d'un logiciel orienté application (5) pour une fonctionnalité souhaitée orientée application à l'intérieur d'un système informatique (1), comprenant les étapes suivantes :
- transmettre des données de configuration (6) au système informatique (1), les données de configuration (6) prescrivant une fonctionnalité d'un logiciel orienté application (5) à créer, le logiciel orienté application (5) à créer comprenant des données d'une pluralité de données de programme d'application, un système d'exploitation de base (10) et d'autres données de configuration (13),
- utilisation de plusieurs composants de programme parmi une pluralité de composants de programme qui sont stockés localement à l'intérieur du système informatique (1), en fonction de la fonctionnalité prédéfinie par les données de configuration (6)les données de configuration (6) comprenant des spécifications sur les composants de programme à utiliser,
- création du logiciel (5) orienté application à l'intérieur du système informatique (1) à l'aide des composants de programme utilisés localement en fonction de la fonctionnalité prédéfinie par les données de configuration (6), les composants de programme utilisés localement étant assemblés avec les autres données de configuration (13) pour former le logiciel (5) orienté application, les données de configuration (6) comprenant en outre des indications sur une configuration du logiciel (5) à créer, une partie des données de configuration (6) étant contenue dans les autres données de configuration (13), et le logiciel (5) orienté application créé se présentant sous la forme d'un image disque, ainsi que
- l'incorporation d'image disque créé dans un environnement d'exploitation (14) dans le système informatique (1) pour fournir la fonctionnalité orientée application souhaitée.

2. Procédé selon la revendication 1, dans lequel les données de configuration (6) comprennent une ou plusieurs paires clé/valeur qui spécifient les composants de programme à utiliser localement à l'intérieur du système informatique (1) pour créer le logiciel orienté application (5).

3. Procédé selon la revendication 1 ou 2, dans lequel les données de configuration (6) comprennent une ou plusieurs paires clé/valeur qui spécifient la configuration du logiciel orienté application (5).

4. Procédé selon l'une quelconque des revendications 1 à 3, dans lequel les données de configuration (6) comprennent exclusivement des données non exécutables.

5. Procédé selon l'une des revendications 1 à 4, dans lequel on utilise comme composants de programme pour créer le logiciel orienté application (5) un système d'exploitation de base (10) et un ou plusieurs données de programme d'application qui sont déposés exclusivement localement à l'intérieur du système informatique (5), le système d'exploitation de base (10) et les données de programme d'application étant assemblés de manière automatisée pour créer le logiciel orienté application (5).

6. Procédé selon l'une des revendications 1 à 5, dans lequel le logiciel orienté application (5) est créé sous forme de machine virtuelle et la machine virtuelle est exécutée localement à l'intérieur du système informatique (1).

7. Système informatique (1) destiné à fournir une fonctionnalité souhaitée orientée vers l'application,
dans lequel, à l'intérieur du système informatique (1), une pluralité de composants de programme pour la création d'un logiciel (5) orienté vers une application est déposée localement,
le système informatique (1) ayant un système de création (9) pour la création automatisée du logiciel (5) orienté application à l'aide de plusieurs composants de programme qui sont tirés localement de la pluralité des composants de programme enregistrés localement en fonction d'une fonctionnalité prédéfinie par des données de configuration (6),
dans lequel le logiciel orienté application (5) à créer comprend des données d'une pluralité de données de programme d'application, un système d'exploitation de base (10) et d'autres données de configuration (13),
dans lequel le système informatique (1) comprend une interface pour une connexion de données (4) avec un serveur de configuration distant (2),
le système informatique (1) étant conçu pour obtenir du serveur de configuration (2), par l'intermédiaire de la connexion de données (4), les données de configuration (6) pour la création du logiciel (5) orienté vers l'application, les données de configuration (6) comprenant des prescriptions sur les composants de programme à utiliser et des prescriptions sur une configuration du logiciel (5) à créer, et
le système de création (9) étant conçu pour créer le logiciel orienté application (5) à l'intérieur du système informatique (1) à l'aide des plusieurs composants de programme utilisés localement en fonction de la fonctionnalité prédéfinie par les données de configuration (6), les composants de programme utilisés localement étant assemblés avec les autres données de configuration (13) pour former le logiciel orienté application (5), une partie des données de configuration (6) étant contenue dans les autres données de configuration (13), et le logiciel orienté application (5) créé étant disponible sous la forme d'un image disque.

8. Système informatique (1) selon la revendication 7, dans lequel un ou plusieurs systèmes d'exploitation de base (10) ainsi qu'un ou plusieurs données de programme d'application sont déposés à l'intérieur du système informatique (1) en tant que composants de programme pour la création du logiciel (5) orienté vers l'application.

9. Système informatique (1) selon la revendication 7 ou 8, dans lequel le système de création (9) est aménagé pour créer le logiciel orienté application (5) sous la forme d'une machine virtuelle.

10. Système informatique (1) selon l'une quelconque des revendications 7 à 9, dans lequel le système informatique (1) est un système informatique de périphérie qui est aménagé pour être intégré dans une machine, une installation ou un système global, et qui est aménagé pour surveiller la machine, l'installation ou le système global et est agencé pour mettre en œuvre un procédé selon l'une quelconque des revendications 1 à 6.

11. Infrastructure informatique comprenant un système informatique (1) selon l'une des revendications 7 à 10 et un serveur de configuration distant (2), le serveur de configuration (2) conservant les données de configuration (6) et pouvant être relié au système informatique (1) au moins temporairement par une connexion de données (4) pour l'introduction des données de configuration (6) dans le système informatique (1).
